# EUROPEAN PATENT SPECIFICATION

(11) **EP 2 909 800 B1**
(45) Date of publication and mention of the grant of the patent: **19.07.2017**
(21) Application number: 13848642.8
(22) Date of filing: 22.10.2013
(51) Int. Cl.: G06Q 30/00, A47F 9/04, G07G 1/00, G06Q 20/20, G06Q 20/32

(54) **PAYMENT PROCESSING ACCESS DEVICE AND METHOD**
ZAHLUNGSVERARBEITUNGSZUGANGSVORRICHTUNG UND -VERFAHREN
DISPOSITIF ET PROCÉDÉ D'ACCÈS À UN TRAITEMENT DE PAIEMENT

(30) Priority: 22.10.2012 US 201261716786 P; 04.10.2013 US 201361887213 P
(43) Date of publication of application: 26.08.2015
(73) Proprietor: Modopayments, LLC, Richardson, TX 75080 (US)
(72) Inventor: MENEFEE, Michael, Richardson, TX 75080 (US); HARVEY, Gregory, W., Marion, IA 52302 (US); PARKER, Bruce, Richardson, TX 75080 (US); WILKINSON, Aaron, Plano, TX 75075 (US)
(74) Representative: Gosnall, Toby
(86) International application number: PCT/US2013/066233
(87) International publication number: WO 2014/066423

(56) References cited:
- US-A1- 2011 029 362
- US-A1- 2011 029 362
- US-A1- 2012 101 887
- US-A1- 2012 101 887
- US-A1- 2012 150 669
- US-A1- 2012 235 865
- US-A1- 2012 235 865

## Description

### TECHNICAL FIELD

The present disclosure relates to electronic payment processing and offer systems, and more specifically to a system and method for making and redeeming offers in conjunction with a secure, mobile, electronic payment processing system.

### BACKGROUND ART

US 2011/029362 (A1), Roeding, discloses a system that sends discounts and other offers to a user's device, but not payment information. Different payments and discounts are disclosed, but none that use the credit card system. Roeding can use MAC addresses to identify a user in a store or location.

US 2012/101887 (A1), Harvey, discloses the use of a virtual payment account number. Part of that number is sent to a user, and another part is sent to the merchant. During checkout the numbers are combined to form the VPAN.

US 2012/150669 (A1), Langley, discloses a system in which a mobile device can be used to pay for a transaction. In Langley, a user can sign up for a program and store payment information on a mobile device, which can then be used to make purchases.

A novel payment processing system is described in United States Patent Application Serial No. 13/282,292 filed October 26, 2011, the contents of which are hereby incorporated herein in their entirety. Some of the key aspects of that payment system revolve around enabling mobile payments in a secure manner and attaching and funding offers and/or gifts, equivalent to coupons and Groupons and so forth, at the time of arrival of the consumer at the store and redeeming them at the point of sale, which is most instances is at the register when the consumer completes the purchase.

The payment system may accomplish this through a series of interactions between the consumer and the system for the sake of the merchant. Those interactions include having the consumer to participate in the system via registering. This registration may be with a global system or with a specific merchant's implementation of the system, or may be with a specific brand. The registration process identifies the consumer to the system, associates his/her mobile device as an operational device with the system via a phone number and/or via unique identifying electronic characteristics, and attaches a payment method or multiple payment methods to the consumer's account. These payment methods may provide the consumer portion of payment when a purchase is made.

In some embodiments, the system may be triggered when the consumer visits a merchant location. These can be single-brand stores, or particular market segment stores like "electronics" stores, or general purpose department store. In all cases, the payment system may be used without any additional local computer or electronic support and with such low-tech interactions as just using "text" (also known as "short message service" or SMS) messaging.

The consumer may receive an offer upon visiting that might incent the consumer to make a purchase decision. Additionally, the consumer may have been presented with a gift redeemable at the particular merchant. This offer or gift, as explained earlier, may be made based on a number of factors including previous purchases or simply consumer interests. These interests and purchases might be collected by the system or might come from data from external sources including "like" patterns on Facebook or traditional data warehouse information from an external loyalty system. The consumer may select merchandise and proceed to the checkout line with the items they've selected. In some instances the consumer may place an order and then proceed to the checkout. If an item that is targeted for the offer is included, this eligibility may be determined at the time the sale is concluded.

To check out, the consumer was given a checkout code upon entry into the merchant and at the point of sale register the cashier has a lane token, or merchant code. The two combined together become a well-formed Virtual Payment Account Number (VPAN) that may be used to complete the transaction. This VPAN generally was envisioned as being dynamic in order to maximize flexibility and security and may be loaded with sufficient funds to permit checkout much in the way that certain merchants like hotels and car rental companies pre-authorize a specific amount. The funding for the offer may be loaded onto the card from the offer provider's account. The balance of the payment may be provided by the consumer's payment method, for example, a credit or debit card.

The steps may be performed without reliance on technological devices for accelerating any of the steps. As noted, the system as described may require zero on-site computer or automated infrastructure beyond that which is already typically installed at a merchant location, such as a point-of-sale register, and a payment terminal for swiping cards and manually entering card numbers and charge amounts (which may be connected to the register). In addition to the existing in-store infrastructure, the merchant may use physical cards with information such as the lane token and steps to be taken to complete a transaction, signage at the entrance to remind consumers of the availability of offers and to get them to send a "visit" message with their phones, and a kiosk for explaining the system and assisting consumers in signing up without even providing a browser since they could use their phones with text messaging.

The described payment system may be enhanced and interactions with it may be accelerated by adding a device or devices at the merchant that increase the functionality of the system and automate one or more aspects of the process.

### DISCLOSURE OF THE INVENTION

Described herein is a payment processing device for processing payment from a consumer at a merchant location using a user device, the device comprising: a presence detection module configured to detect presence of the user device at the merchant location ; and a checkout module configured to communicate with a backend system to verify an identity of the user device, to receive payment information from the user device, and to transmit payment information to a merchant point-of sale (POS) system. The payment processing device may further comprise a receipt tap module configured to capture an electronic version of a transaction receipt related to the payment information. The presence detection module may further comprise a Bluetooth module configured to transmit and receive signals to the user device, the signals configured to detect presence. The signals may be further configured to transmit an offer to the user device. The checkout module may be further configured to prevent a transaction between the user device and the payment processing device if a distance between the user device and the payment processing device is greater than a predetermined distance. The checkout module may be configured to determine the distance. The checkout module further may further comprise an attenuator configured to attenuate signals transmitted from the checkout module. The payment information may comprise a Virtual Payment Account Number (VPAN). The payment information may comprise a transaction identifier associated with a VPAN.

Described herein is a method for payment processing between a consumer and a merchant at the merchant location using a mobile device, the method comprising the steps of detecting presence of the mobile device by a detection device; notifying a backend device of the presence of the mobile device; receiving, from the mobile device, payment information; and transmitting the payment information to a point-of sale (POS). Detecting presence of a mobile device may comprise sending a Bluetooth inquiry message; receiving a response to the Bluetooth inquiry message comprising a Bluetooth media access control (MAC) address of the mobile device; and transmitting the Bluetooth MAC address to the backend device. Detecting presence of a mobile device may comprise monitoring a list of received WiFi traffic, the list comprising a WiFi MAC address of the mobile device; and transmitting the WiFi MAC address to the backend device. Detecting presence of a mobile device may further comprise receiving, from the backend device, a Bluetooth MAC address corresponding to the WiFi MAC address; transmitting, via Bluetooth, an information request to the Bluetooth MAC address; and receiving an information response from the user device responsive to the information request. Receiving, from the mobile device, payment information may comprise receiving a VPAN via one of: a Bluetooth transmission; a scanned barcode; a Near Field Communication (NFC) transmission; and a user input received via Short Message service (SMS).

Described herein is a system for payment processing between a consumer and a merchant at a merchant location, the system comprising an in-store device comprising a checkout system configured to provide payment information to a point-of sale (POS) system; a user device; and a backend device configured to: receive identification information related to the user device; receive payment information related to the user device; and store the identification information and payment information. The system may further comprise a magnetic card reader configured to: receive payment card information; and transmit the payment card information to the in-store device, and wherein the in-store device is configured to transmit the payment card information to the backend device, the backend device configured to store the payment card information as payment information. The system may further comprise a receipt tap configured to: receive an electronic receipt from the POS system; and transmit the electronic receipt to the in-store device, the in-store device configured to transmit the electronic receipt to one or more of: the backend system and the user device. The system may further comprise one or more Bluetooth radio devices configured to transmit and receive between the in-store device and the user device. The system may further comprise one or more NFC devices configured to transmit and receive between the in-store device and the user device. The system may further comprise one or more WiFi network devices configured to communicate with the user device, the in-store device configured to monitor network traffic of the one or more WiFi network devices. The system may further comprise an optical code reader configured to receive payment information from the user device. The system may further comprise a user interface configured to receive inputs, the inputs transmitted to the backend device and stored as identification information.

Described herein is a detection device for detecting the presence of a customer at a merchant location using a customer's user device and thereby enabling a payment by the customer, the detection device comprising a wireless communications module configured to communicate with the user device and thereby detect when the user device is in the merchant location; a processor in communication with the wireless communications module and configured to send the presence of the user device to a backend system, the backend system operable to confirm the identity of the customer using the user device; wherein the detection of the customer at the merchant location enables the customer to pay for a transaction with the merchant using the user device. The wireless communications module may use Bluetooth. The wireless communications module may use Wifi. The wireless communications module may use near field communication.

Described herein is a checkout device for allowing a customer to pay for a transaction at a merchant location using a customer's user device, the checkout device comprising an interface module configured to interact with the user device and thereby detect when the user device is being presented for payment of the transaction; a processor in communication with the interface module and configured to send checkout information provided by the user device to a point of sale system, the point of sale system operable to process the payment transaction using the information from the user device. The interface module may use Bluetooth. The interface module may use near field communication. The interface module may use an optical code reader.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawings, in which:
FIG. 1 is a process diagram showing an embodiment of a system incorporating a payment processing access device according to the concepts described herein;
FIG. 2 is a block diagram of an embodiment of a system incorporating a payment processing access device according to the concepts described herein;
FIG. 3 is a block diagram of an embodiment of a system incorporating a payment processing access device according to the concepts described herein;
FIG. 4 is a flow chart showing an embodiment of a COIN/SMS based payment process incorporating a payment processing access device according to the concepts described herein;
FIG. 5 is a block diagram of an embodiment of a system incorporating a payment processing access device according to the concepts described herein;
FIG. 6 is a block diagram of an embodiment of a system incorporating a Bluetooth detection device according to the concepts described herein;
FIG. 7 is a block diagram of an embodiment of a Bluetooth registration process according to the concepts described herein;
FIG. 8 is a block diagram of an embodiment of a Bluetooth passive detection process according to the concepts described herein;
FIG. 9 is a block diagram of an embodiment of a Bluetooth active detection process according to the concepts described herein;
FIG. 10 is a block diagram of an embodiment of near field communication (NFC) location detection according to the concepts described herein;
FIG. 11 is a block diagram of an embodiment of a WiFi detection process according to the concepts described herein;
FIG. 12 is a block diagram of an embodiment of a multi-protocol detection process according to the concepts described herein;
FIG. 13 is a flow chart showing an embodiment of a wireless based payment process incorporating a payment processing access device according to the concepts described herein;
FIG. 14 is a flow chart showing an embodiment of a counterless payment process incorporating a payment processing access device according to the concepts described herein; and
FIG. 15 is a block diagram on an embodiment of an in-store device according to the concepts described herein.

### BEST MODES FOR CARRYING OUT THE INVENTION

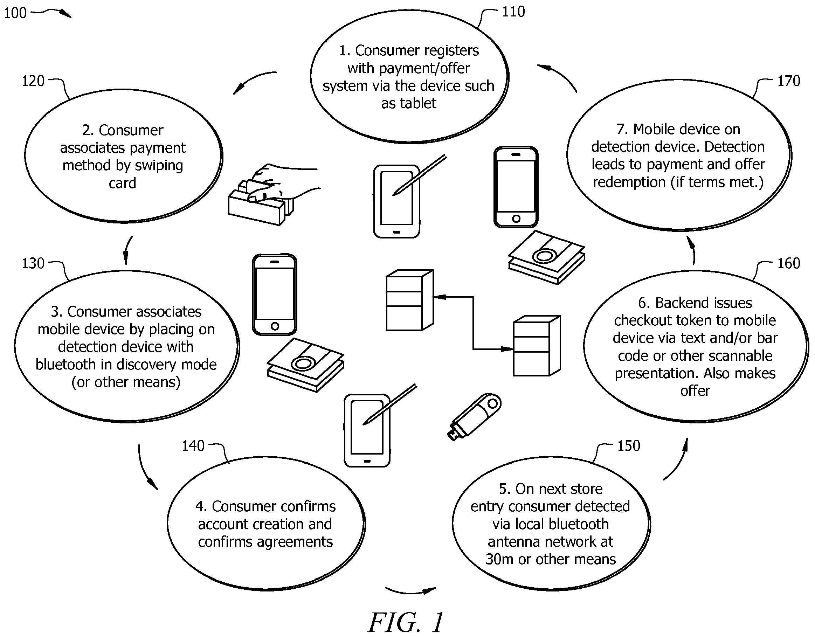

FIG. 1 is a process diagram showing an embodiment of a system incorporating a payment processing access device 100. The process begins at step 110 when a consumer registers with the payment/offer system via an in-store device located on the premises of the merchant. The in-store device may have a touch screen interface or some other input peripheral that allows the consumer to enter relevant information, for example, name, address, phone number, email address, social media handles, etc. that is associated with the consumer's account. At step 120, the consumer may associate a payment method with the account. This may be accomplished by swiping a credit or debit card at a magnetic card reader. While a magnetic card reader is depicted in FIG. 1, other methods of associating a payment method may be used, for example, typing in an account number or any other payment method that may be accepted by the merchant and/or the payment/offer system. At step 130, the consumer may associate a mobile device with their account. The consumer may accomplish step 130 by placing their mobile device on or near the in-store device. If the mobile device supports Bluetooth, the consumer may place the mobile device in Bluetooth discovery mode. In some embodiments the mobile device may be associated using NFC, WiFi, or some other method of communication between the mobile device and the in-store device. At step 140, the consumer confirms their account information and any agreements that are required by the merchant and/or the payment/offer system. On a subsequent visit to the merchant at step 150, the consumer's mobile device may be detected, indicating the presence of the consumer at the merchant premises. The detection may be via Blue tooth, or some other means, for example, WiFi, NFC, or some other method of communication between the mobile device and the in-store device. In some embodiments, the mobile device may be detected and presence indicated to the payment/offer system backend without any involvement from the phone's apps or operating system, for example, mobile device may be configured with iBeacon or Bluetooth LE technology which provides a MAC address of the mobile device to the in-store device, which may then provide that identifier or some other identifier related to the mobile device MAC address to the payment/offer system backend. In addition, if multiple detection devices are present in a merchant location, the location of the mobile device may be triangulated using the multiple detection devices. The multiple detection devices may communicate in order to exchange or relay information about detected devices. Triangulated location information may be used to make offers to a mobile device based on products they are near. Payment information may be automatically sent if a mobile device location is triangulated to be near a POS. After detecting the presence of the mobile device, the backend of the payment/offer system may issue a check out token to the mobile device via a text message, the checkout token may be a bar code, an optically machine-readable code, or some other exchangeable or scannable presentation at step 160. Also, if any offers are available, they will be made at step 160. At step 170, the mobile device is placed on or in proximity of the in-store device. Detection of the mobile device by the in-store device leads to payment and redemption of any offers used by the consumer.

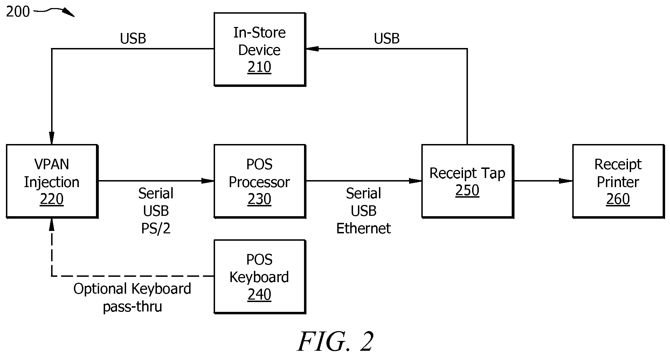

FIG. 2 is a block diagram of an embodiment of a system incorporating a payment processing access device 200. The system incorporating a payment processing access device 200 may comprise an in-store device 210, a VPAN injection module 220, a point of sale (POS) processor 230, an optional POS keyboard 240, a receipt tap module 250, and a receipt printer 260. The in-store device 210, VPAN injection module 220, and receipt tap module 250 may all be part of the payment/offer system described herein. The POS processor 230, optional POS keyboard 240, and receipt printer 260 may be existing equipment that is present at a merchant premises. The in-store device 210 may be configured to provide a VPAN to the VPAN injection module 220. While a USB connection is depicted, other types of connections and transmission media both wired and wireless may be used in the system. The VPAN injection module 220 may provide the VPAN to the POS processor 230 when a consumer is ready to check out. In some embodiments, the VPAN or some other payment token identifier may be presented to the consumer on their mobile device. The VPAN or other payment token identifier may be exchanged or scanned using the mobile scanner or may be manually entered using the POS keyboard 240 as required. POS processor 230 would process the VPAN as it normally does and generate a receipt for the transaction. The receipt tap 250 may be placed between the processor and the receipt printer and may capture an electronic image of the receipt for electronic transmission to the in-store device 210. The electronic image may be used to reconcile offers and payments and/or may be transmitted electronically to a consumer's mobile device. The receipt printer 260 may then print a receipt of the transaction, or in some embodiments where the receipt is transmitted electronically, a paper copy of the receipt may not be printed based on preferences of the merchant and/or the consumer.

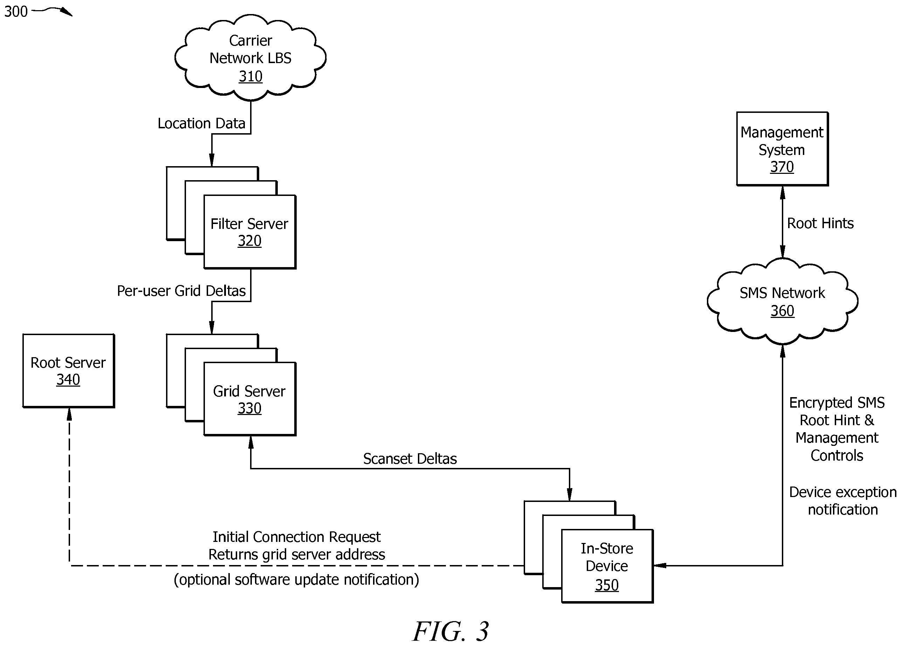

FIG. 3 is a block diagram of an embodiment of a system incorporating a payment processing access device 300. The system incorporating a payment processing access device 300 comprises a carrier network location based system (LBS) 310, one or more filter servers 320, one or more grid servers 330, a root server 340, one or more scan boxes 350, a short message system (SMS) network 360, and a management system 370. Carrier Network LBS 310 may provide location data related to the mobile devices of users of the payment/offer system to one or more Filter Servers 320. The location data may be requested by the payment/offer system for the mobile devices associated with the system. Filter server 320 may partition a geographic area into a grid resulting in a plurality of grid areas that may be identified by coordinates or other means for locating a geographic area. Each grid area may be associated with one or more Grid Servers 330. Filter server 320 may be configured to determine which mobile devices are in particular grid areas. Filter server 320 may associate additional information related to the mobile device with the location data provided by the carrier network LBS. For example, the carrier network LBS 310 may only provide a location and a phone number, or SIM identifier. This information may not be sufficient for the in-store device 350 to interact with a customer, in this case,, filter server 320 may associate additional information stored in the payment/offer system with the location data. Filter server 320 may then notify grid servers 330 associated with a particular grid area that a particular mobile device is present in that grid area and provide the additional information as needed. Grid server 330 may then notify one or more in-store devices 350 that a particular mobile device is in their presence. In-store device 350 may then interact with the particular mobile device to present offers or complete transaction as described herein. In some embodiments, when in-store device 350 is powered on or recovers from a reset, it may be unaware of which grid server to listen to. Iin this case, management system 370, which may be part of the payment/offer system backend, sends an encrypted message via SMS network 360 to the in-store device 350. The encrypted message contains an address of a root server 340. In-store device 350 may then communicate with root server 340 to receive an address of a grid server 330 associated with the in-store device 350. In some embodiments, root server 340 may also provide software updates to the in-store device 350.

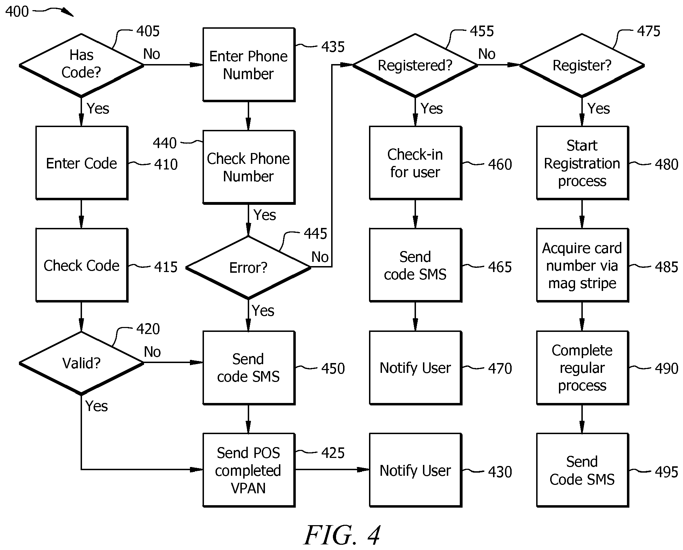

FIG. 4 is a flow chart showing an embodiment of a COIN/SMS based payment process incorporating a payment processing access device. The process begins at step 405 when it is determined whether or not a consumer's mobile device has a payment code. The payment code may be a partial VPAN, a complete VPAN or some other payment identifier that is related to a VPAN. The determination may be made by the consumer, the mobile device, or an in-store device. If the mobile device has a payment code, the payment code may be entered at a POS at step 410. The payment code may be entered by various means, for example, by having the mobile device communicate with the POS terminal or in-store device, by scanning a bar code or other optically machine-readable code presented on the mobile device, or typing a code in at a keyboard. At step 415 the payment code is checked for validity. The check may be performed via an in-store device connected to the payment/offer system backend. If the payment code is valid, a VPAN is sent to the POS at step 425. At step 430, the consumer is notified of the completion of the transaction. If at step 420, the payment code is invalid, a valid payment code may be transmitted to the mobile device via, for example, an SMS message at step 450. If the mobile device does not have a code, a phone number or other identifier of the mobile device may be presented to the payment/offer system by a consumer at step 435.

At step 440, the phone number or other identifier is checked, if it is determined that an error has occurred, a valid payment code may be transmitted to the mobile device via, for example, an SMS message at step 450. The process may then continue with steps 425 and 430. If at step 445, it is determined that no error has occurred, the payment/offer system determines if the mobile device is registered with the system. If the mobile device is registered with the system, the payment/offer system checks the mobile device in at the merchant location at step 460. Subsequently at step 465 a payment code may be transmitted to the mobile device, notifying the user at step 470. If the mobile device is not registered with the system, the payment/offer system may send a message to the mobile device, or the merchant may inquire as to whether the mobile device would like to register with the payment/offer system at step 475. If the mobile device would like to register with the system, the registration process may start at step 480. The payment/offer system may acquire a payment method from the consumer via an in-store device at step 485, for example a payment card number may be acquired via swiping a magnetic stripe through a card reader. The registration process may be completed at step 490, and a payment code may be sent via SMS to the mobile device at step 495.

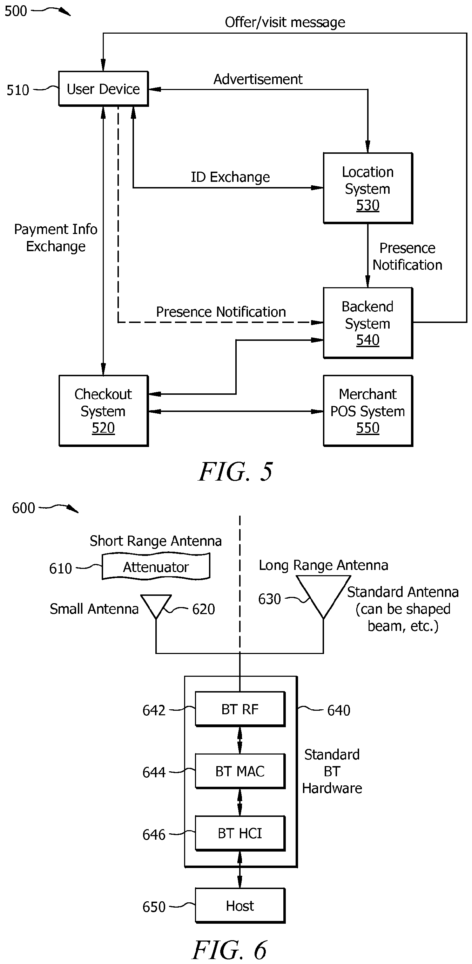

FIG. 5 is a block diagram of an embodiment of a payment/offer system incorporating a payment processing access device 500. The payment/offer system incorporating a payment processing access device 500 comprises a user device 510, a checkout system 520, a location system 530, a backend system 540, and a merchant system POS 550. Location system 530 may detect the presence of user device 510 at the merchant. Location system may use various methods to detect user device 510, for example, Bluetooth, NFC and/or WiFi. Location system 530 may actively detect user device 510 or it may passively detect user device 510. Active detection may include the location system advertising itself to the mobile device 510. Passive detection may include the user device 510 advertising itself to the location system 530. Part of the detection process whether active or passive may include an ID exchange between the location system 530 and user device 510. The ID exchange may be used to identify the user device 510 to the location system 530 and vice versa. Once the user device is located at the merchant by the location system 530, the location system 530 may transmit a presence notification to the backend system 540, notifying the backend system 540 of the presence of the user device 510 at the location. Alternatively, the user device may notify the backend system of its presence at the merchant without involving location system 530. When the backend system 540 receives presence notification of the user device 510, an offer message and/or a visit message may be transmitted to the user device 510 from the backend system 540 via a wireless network. Checkout system 520 may interact with user device 510 to provide and/or receive information related to payment. Checkout system 520 may interact with backend system to provide details regarding a possible transaction and receive a VPAN. The received VPAN may be provided to the merchant POS system 550 in order to complete a transaction.

FIG. 6 is a block diagram of an embodiment of an in-store system incorporating a Bluetooth detection device 600. The in-store system incorporating a Bluetooth detection device 600 may comprise an attenuator 610, a small antenna 620, a long range antenna 630, standard Bluetooth hardware 640 comprising a Bluetooth RF component 642 for transmitting and receiving, a Bluetooth media access controller (MAC) component 644, and a Bluetooth host controller interface (HCI) for communicating with host 650. In some embodiments, the attenuator 610 may be used to attenuate a Bluetooth signal transmission area to several inches from the transmitter resulting in a small antenna 620. In some other embodiments a long range antenna 630 may be used, in these embodiments, the long range antenna 630 may be shaped or beam formed. In some embodiments, small antenna 620 may be used for payment processing, while long range antenna 630 may be used for presence detection. In some embodiments handling payment transactions at a short range may be desirable to avoid security concerns of network sniffers or other devices used to receive a signal not intended for them. In these cases, the attenuator may prevent the small antenna from transmitting beyond a certain distance from the in-store system. For example a few feet or less. In other embodiments, an attenuator may not be used and some other method for detecting the distance of the mobile device from the in-store device may be used. For example, the in-store device may comprise a module capable of using radio frequency (RF) to determine the distance. As another example, a received signal strength indication (RSSI) or received channel power indicator (RCPI) may be used to prevent a transaction from occurring until the mobile device is within a certain distance of the in-store device. While the example describes RSSI or RCPI, any technology capable of determining the distance of the mobile device from the in-store device may be used as appropriate to prevent transactions from occurring until the mobile device is within a pre-determined distance of the in-store device.

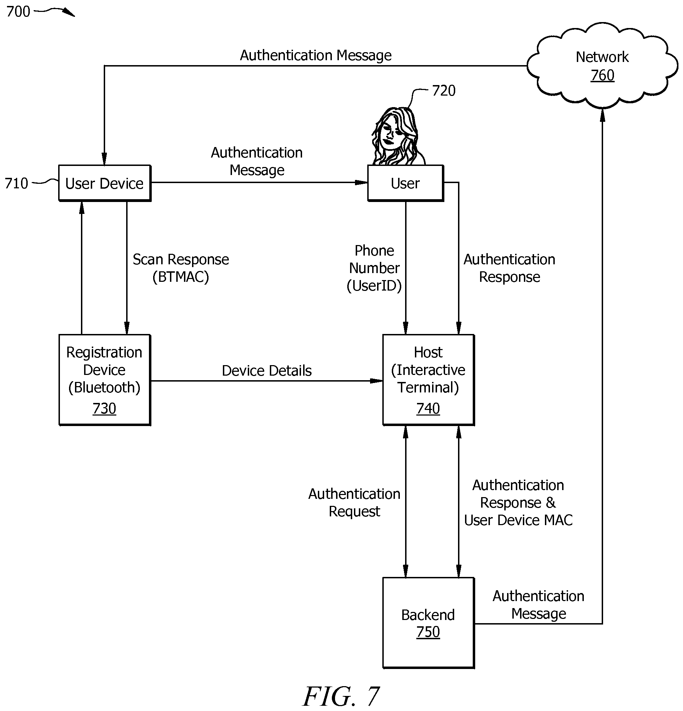

FIG. 7 is a block diagram of an embodiment of a Bluetooth registration process 700. User device 710 may receive a message from registration device 730 and respond with a scan response comprising the Bluetooth MAC address of user device 710. Registration device 730 may provide details related to user device 710 to host 740. User 720 may enter a phone number or other identifier related to the user device 710 that may be used as a userID. Host 740 may then provide an authentication request to backend 750. The authentication request may comprise the device details and the phone number or other identifier. Backend 750 may then transmit an authentication message to user device 710 vi network 760. Network 760 may be any communication network capable of enabling communication between backend 750 and user device 710. User device 710 may present the authentication message to user 720. User 720 may provide an authentication response to host 740 in response to the authentication message. Host 740 may then provide the authentication response to backend 750 to confirm registration of user device 710.

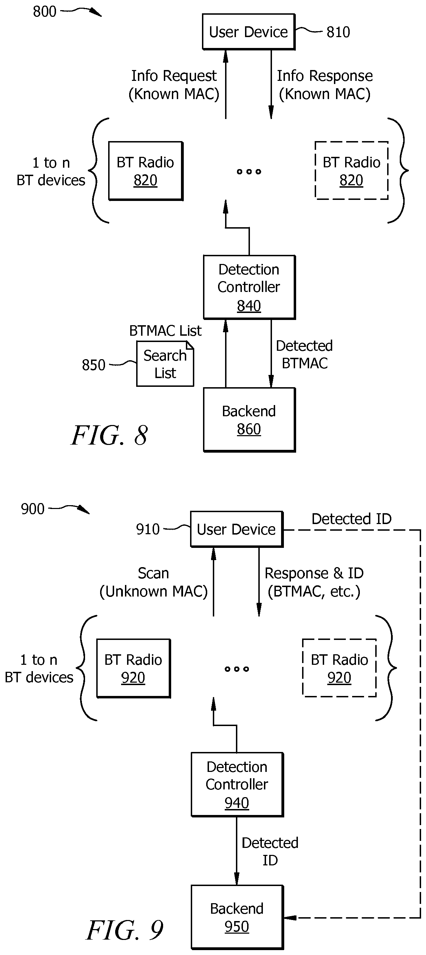

FIG. 8 is a block diagram of an embodiment of a Bluetooth passive detection process 800. User device 810 may receive an info request via Bluetooth from a Bluetooth radio device 820 installed at a merchant. 1 to n Bluetooth radio devices 820 may be installed at a merchant, where n is an integer greater than zero and the value of n is based upon transmission strength of the Bluetooth radio devices 820 and/or the physical size of the merchant or other characteristics that may impact transmission range coverage. User device 810 may respond to the info request with an info response. The info response may contain the Bluetooth MAC address of the user device 810. Bluetooth radio device 820 may transmit the info response to detection controller 840. Detection controller 840 may be a device installed at the merchant for interaction with the payment/offer system backend 860. Backend 860 may receive the Bluetooth MAC address of user device 810 from detection controller 840. Backend 860 may compare the received Bluetooth MAC address to a list 850 of registered Bluetooth MAC addresses. In some embodiments, list 850 may be stored at the detection controller 840 and detection controller 840 may compare the received Bluetooth MAC address. If the list 850 is stored at the detection controller 840 it may be periodically updated by the backend 860 when new Bluetooth MAC addresses register with the payment/offer system. If the received Bluetooth MAC address is on list 850, offers or other information may then be transmitted to user device 810. If the received Bluetooth MAC address is not on list 850, then an invitation to register with payment/offer system may be transmitted to user device 810.

FIG. 9 is a block diagram of an embodiment of a Bluetooth active detection process 900. Detection controller 940, installed at a merchant, may periodically scan for active Bluetooth devices using Bluetooth radio device 920. User device 910 may receive a scan via Bluetooth from Bluetooth radio device 920 installed at a merchant. 1 to n Bluetooth radio devices 920 may be installed at a merchant, where n is an integer greater than zero and the value of n is based upon transmission strength of the Bluetooth radio devices 920 and/or the physical size of the merchant or other characteristics that may impact transmission range coverage. User device 910 may respond to the scan with a scan response. The scan response may comprise an identifier of user device 910, for example a Bluetooth MAC address. The scan response may be received at Bluetooth radio device 920 and transmitted to detection controller 940. Detection controller may transmit the Bluetooth MAC address or some other identifier to backend 950. If the received Bluetooth MAC address is registered, offers or other information may then be transmitted to user device 910. If the received Bluetooth MAC address is not registered, then an invitation to register with payment/offer system may be transmitted to user device 910.

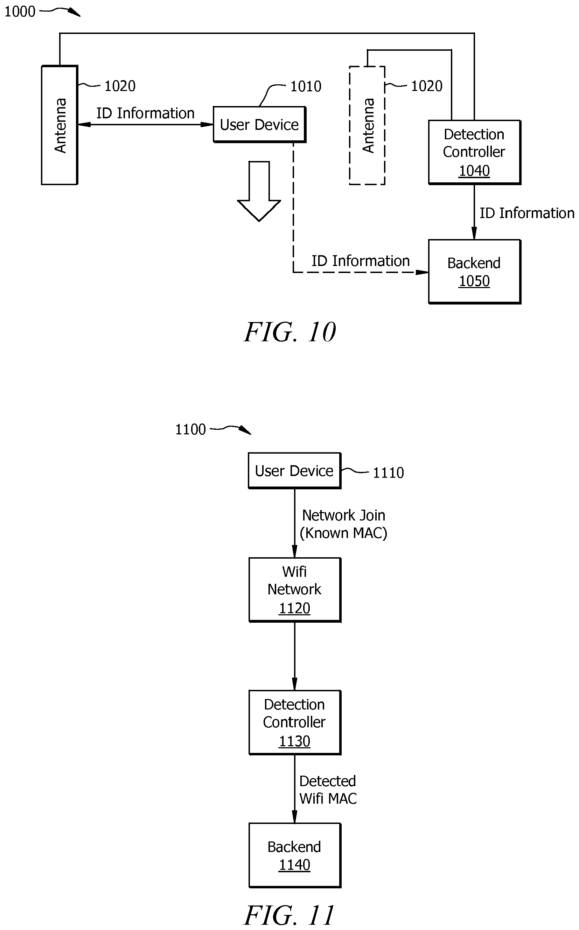

FIG. 10 is a block diagram of an embodiment of a near field communication (NFC) location detection 1000. Detection controller 1040 may be connected to 1 to n antenna 1020. Antenna 1020 may be configured to operate as an NFC antenna. As user device 1010 passes through the NFC field created by antenna 1020, ID information may be transmitted from the user device to antenna 1020. Detection controller 1040 may then receive the ID information from antenna 1020 and forward to backend 1050. In some embodiment, user device 1010 may receive ID information from detection controller 1040 via antenna 1020 and then transmit used device 1010 ID information to backend 1050 without going through detection controller 1040. Backend 1050 may determine whether the received ID information is registered with the payment/offer system. If the received ID information is registered, offers or other information may then be transmitted to user device 1010. If the received ID information is not registered, then an invitation to register with payment/offer system may be transmitted to user device 1010.

FIG. 11 is a block diagram of an embodiment of WiFi location detection 1100. In some embodiments, user device 1110 may join a WiFi network 1120 at a merchant. Detection controller 1130 may monitor connections to WiFi network 112o. For example, detection controller 1130 may periodically check connections to a WiFi router at the merchant. When user device 1110 joins WiFi network 1120, detection controller 1130 may notify backend 1140 of the presence of user device 1110. Backend 1140 may then transmit offers or other information to user device 1110.

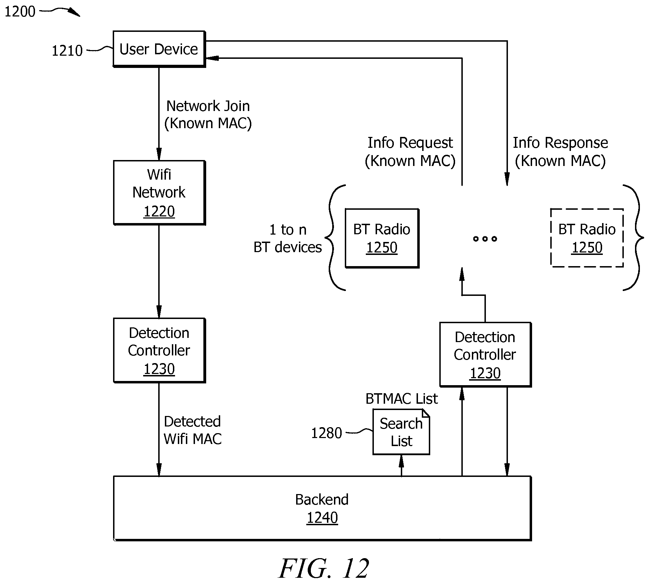

FIG. 12 is a block diagram of an embodiment of a multi-protocol detection process 1200. Multi-protocol detection may comprises detecting presence of a user device via first type of detection and verifying presence via a second type of detection. For example, user device 1210 may visit a merchant and join WiFi network 1220 present at the merchant. Detection controller 1230 may inform backend 1240 of the presence of user device 1210. Detection controller 1230 may transmit a WiFi MAC address of user device 1210 to backend 1240, or some other identifier that may be correlated to the used device 1210. Backend 1240 may then check a list 1280 comprising a correlation of WiFi MAC addresses (or the other identifier transmitted by detection controller 1230 to backend 1240) to Bluetooth MAC addresses. Backend 1240 may transmit the Bluetooth MAC address to detection controller 1230, which may in turn add the Bluetooth MAC address to a search list. Detection controller 1230 may search for the Bluetooth MAC address using Bluetooth radio device 1250. User device 1210 may respond to the search thereby confirming presence at the merchant. Multi-protocol detection may be used in cases where a WiFi network of a first merchant overlaps a WiFi network of a second merchant. Also, Multi-protocol detection may be used to enhance security by enabling two-token authentication (i.e., WiFi MAC address and Bluetooth MAC address).

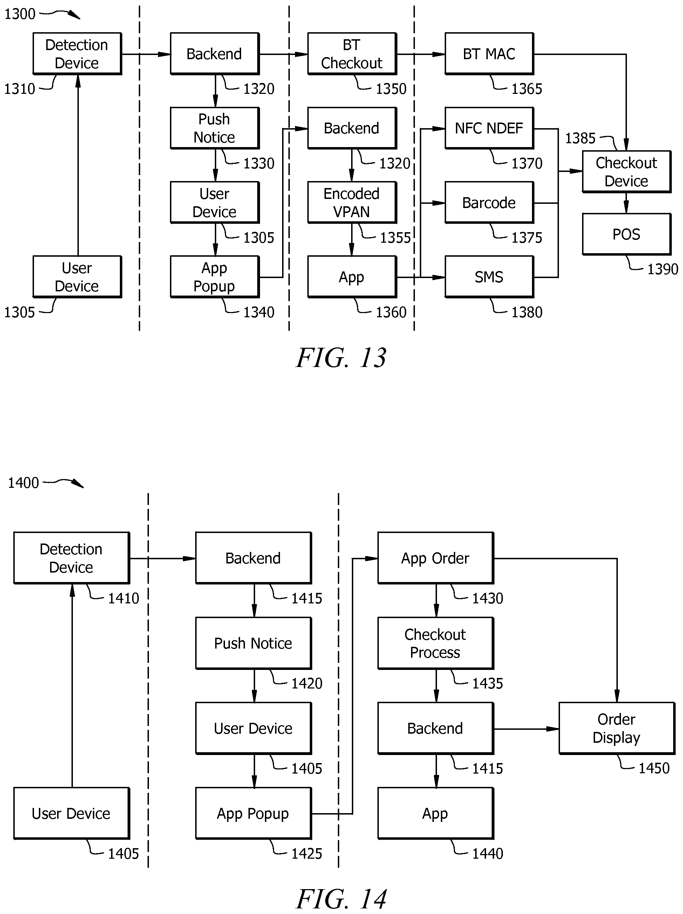

FIG. 13 is a flow chart showing an embodiment of a wireless based payment process incorporating a payment processing access device 1300. User device 1305 may interact with a detection device 1310 upon entering a service area of a merchant. In some embodiments, the user device 1305 may be actively searching for detection device 1310, while in other embodiments, the detection device 1310 may be actively searching for user device 1305. While only one user device 1305 and detection device 1310 are depicted, it should be understood that any number of user devices 1305 and any number of detection devices 1310 may be present in the service area of the merchant. Detection device 1310 may be capable of detecting the presence of user device 1305 using various technologies, some examples of the detection technologies include WiFi, Bluetooth, NFC, geofencing, or any combination of these technologies or any other technology that may be used to detect the presence of user device 1305.

Upon detecting user device 1305, detection device 1310 may inform backend 1320 of the presence of the device at the service area of the merchant. Backend 1320 may determine whether or not the user device 1305 is registered with the payment/offer service. If user device 1305 is registered with the payment/offer service, backend 1320 delivers a push notice to user device 1305. Responsive to push notice 1330, application (app) popup 1340 may be displayed on user device 1305 to a user. App popup 1340 may display offers for the merchant or other information relevant to transactions with the merchant. Backend 1320 may determine the forms of payment accepted by the merchant and generate an appropriate VPAN or other payment code for use during transactions between the consumer and merchant. Backend 1320 may make this determination based upon a previous agreement with the merchant, or based upon devices installed in the merchant service area.

If the user device 1305 and the merchant support Bluetooth, then Bluetooth checkout module 1350 may be used to detect the user device 1305 based upon a Bluetooth MAC address of the user device 1305. Subsequently, the user device 1305 may be used to transmit payment information via Bluetooth MAC 1365 to checkout device 1385, which in turn may provide payment information, for example a VPAN, to POS 1390. In some embodiments, a Bluetooth transmitter in the checkout device 1385 may be attenuated in order to reduce the transmission area of the Bluetooth signal. In some embodiments, detection device 1310 and checkout device 1385 may be housed in a single apparatus, in others, they may be housed in separate apparatuses.

If the user device 1305 and/or the merchant do not support or choose not to use Bluetooth checkout 1350, then backend 1320 provides an encoded VPAN 1355 to app 1360. App 1360 presents the encoded VPAN 1355, or some other payment code, to the checkout device 1385 via one of NFC NDEF 1370, barcode 1375, or SMS 1380. Checkout device 1385 may contain one or more of a NFC communication device, a barcode reader, and an input device for entering a payment number. The payment number may be a VPAN, an encoded VPAN 1355 or some other payment code that may be correlated by the checkout device 1385 via the backend 1320 to a VPAN. Checkout device 1385 may also contain a module to decode and/or verify an encoded VPAN 1355. This may be accomplished using a hash function or other techniques used for encryption/decryption.

FIG. 14 is a flow chart showing an embodiment of a counterless payment process incorporating a payment processing access device 1400. User device 1405 may be detected by detection device 1410 using one of the detection processes described herein (i.e. Bluetooth, WiFi, NFC, etc.). Detection device 1410 notifies backend 1415 of the presence of user device 1405. Backend 1415 sends a push notice 1420 to user device 1405. The push notice may cause an app popup 1425 to be displayed on user device 1405. The push notice may contain offers or other transaction related information. The user may place an order with the merchant via an app 1430. App 1430 and app popup 1425 may be the same app or different apps. Checkout process 1435 may then be executed on user device 1405. Checkout process way comprise the user confirming a purchase amount, entering a PIN or other steps necessary to complete a transaction between the merchant and user. Checkout process 1435 may then notify backend 1415 that the transaction is complete. Backend 1415 may complete the transaction by charging the appropriate accounts for the purchase. A confirmation may be displayed via order display 1450 and/or app 1440. Counterless payment may enable purchases by consumers without requiring interaction with an employee of the merchant.

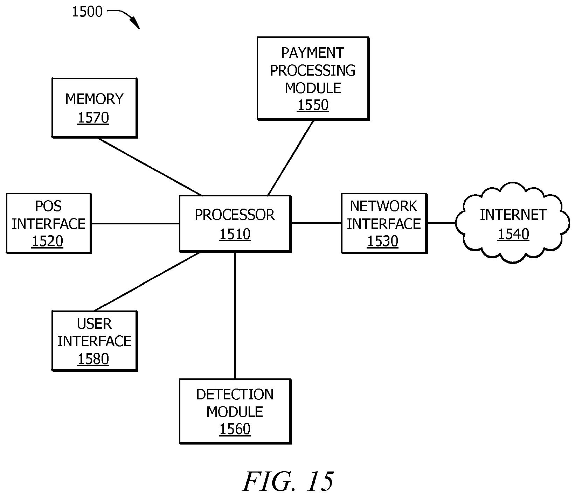

FIG. 15 is a diagram of an embodiment of an in-store device 1500. In-store device 1500 may comprise a processor 1510, a POS interface 1520, a network interface 1530, a payment processing module 1550, a memory 1570, and a user interface 1580. Processor 1510 may be configured to execute software instructions stored in memory 1570. Processor 1510 may be further configured to cause the components of the in-store device 1500 to behave according to the embodiments described herein. POS interface may be an interface between the in-store device 1500 and a merchant's POS terminal. POS interface 1520 may interact with merchant POS to provide a VPAN or other payment information to the POS. Network interface 1530 may be configured to connect the in-store device 1500 to the internet 1540. The connection between the network interface 1530 and the internet 1540 may be wired or wireless. Internet 1540 may provide a path for the in-store device 1500 to interact with the payment/offer system backend (not pictured). Payment processing module 1550 may be configured to interact with a mobile device or user to receive payment information. Payment processing module 1550 may comprise NFC devices, bar code readers or other optical code readers, WiFi devices, Bluetooth devices, magnetic card readers, or any other means for transmitting payment information from a consumer or mobile device to the in-store device 1500. User interface 1580 may be a keyboard, mouse, touch screen interface or some other input device used by a consumer or merchant to enter information at the in-store device. User interface 1580 may be used during account creation by a consumer, or at other time the payment/offer system needs information from a consumer or merchant. User interface 1580 may also be used by technicians in trouble shooting and/or repairing in-store device 1500.

In some embodiments, a merchant's in-store device may comprise only presence detection functionality. For example, a merchant may have an in-store device that detects the presence of a mobile device and reports presence to the payment/offer system backend. Payment/offer system backend may provide offers and/or payment information to the mobile device. The mobile device may then be used to present payment information and or offer information to the merchant's POS. In some embodiments, a merchant's in-store device may comprise only payment processing functionality. For example, the grid-system described in FIG.3 may alert the in-store device to the presence of a particular mobile device. The mobile device may then be used at the in-store device to complete a payment transaction. In some embodiments, a merchant may have multiple in-store devices, some comprising presence detection functionality and some comprising payment processing functionality. In still other embodiments, a merchant may have a single in-store device comprising both presence detection functionality and payment processing functionality.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A payment processing device (210) in a merchant location for processing payment from a consumer at the merchant location using a user device (510), the device (210) comprising:
a presence detection module (530) configured to detect presence of the user device (510) at the merchant location using wireless signals from the user device (510), wherein the wireless signals from the user device include information specific to the user device (510), wherein a backend system (540) is arranged to send payment information to the user device (510) after the user device (510) is detected; a point-of-sale (POS) interface (1520) connected to a merchant POS system (550); and
a checkout module (520) configured to communicate with the backend system (540) to verify an identity of the user device (510) using the information gathered from the user device by the presence detection module (530), to receive the payment information from the user device (510), and to transmit the payment information to the merchant POS system (550) using the POS interface (1520).

2. The payment processing device (210) of claim 1 further comprising:
a receipt tap module (250) configured to capture an electronic version of a transaction receipt related to the payment information.

3. The payment processing device (210) of claim 1 wherein the presence detection module (530) further comprises a Bluetooth module configured to transmit and receive signals to the user device (510), the signals configured to detect presence.

4. The payment processing device (210) of claim 3, wherein the signals are further configured to transmit an offer message to the user device (510).

5. The payment processing device (210) of claim 1, wherein the checkout module (520) is further configured to prevent a transaction between the user device (510) and the payment processing device (210) if a distance between the user device (510) and the payment processing device (210) is greater than a predetermined distance.

6. The payment processing device (210) of claim 5, wherein the checkout module (520) is configured to determine the distance.

7. The payment processing device (210) of claim 5, wherein the checkout module (520) further comprises an attenuator (610) configured to attenuate signals transmitted from the checkout module (520).

8. The payment processing device (210) of claim 1 wherein the payment information comprises a Virtual Payment Account Number (VPAN).

9. The payment processing device (210) of claim 1 wherein the payment information comprises a transaction identifier associated with a VPAN.

10. A method for payment processing between a consumer and a merchant at the merchant location using a consumer's mobile device (510), the method comprising the steps of:
detecting presence of the consumer's mobile device (510) at the merchant location by a detection device (530) in the merchant location, wherein the detection device (530) is configured to exchange wireless signals with the consumer's mobile device (510), the wireless signals including information specific to the consumer's mobile device (510);
notifying, over an external network (1540), a backend device (540) of the presence of the consumer's mobile device (510), using a network interface (1530) in the detection device (530);
sending, to the consumer's mobile device (510), payment information received from the backend device (540);
receiving, from the consumer's mobile device (510), the payment information; and
transmitting the payment information to a merchant point-of sale (POS) system (550).

11. The method of claim 10, wherein detecting presence of the consumer's mobile device (510) comprises:
sending a Bluetooth inquiry message;
receiving a response to the Bluetooth inquiry message comprising a Bluetooth media access control (MAC) address of the consumer's mobile device (510); and
transmitting the Bluetooth MAC address to the backend device (540).

12. The method of claim 10, wherein receiving, from the consumer's mobile device (510), payment information comprises receiving a VPAN via one of: a Bluetooth transmission; a scanned barcode; a Near Field Communication (NFC) transmission; and a user input received via Short Message service (SMS).

13. A system for payment processing between a consumer and a merchant at a merchant location, the system comprising:
a user device (510); and
an in-store device (500) comprising:
a presence detection module (530) configured to detect presence of the user device (510) at the merchant location using wireless signals from the user device (510), wherein the wireless signals from the user device include information specific to the user device (510), wherein a backend system (540) is arranged to send payment information to the user device (510) after the user device (510) is detected;
a point-of-sale (POS) interface (1520) connected to a merchant POS system (550); and
a checkout module (520) configured to communicate with the backend system (540) to verify an identity of the user device (510) using the information gathered from the user device by the presence detection module (530), to receive the payment information from the user device (510), and to transmit the payment information to the merchant POS system (550) using the POS interface (1520).

14. The system of claim 13 further comprising:
a magnetic card reader configured to:
receive payment card information; and
transmit the payment card information to the in-store device (500), and
wherein the in-store device is configured to transmit the payment card information to the backend system (540), the backend system (540) configured to store the payment card information as the payment information.

## Patentansprüche

1. Eine Zahlungsverarbeitungsvorrichtung (210) an einem Händlerstandort für die Verarbeitung der Zahlung eines Kunden am Händlerstandort mit einem Anwendergerät (510), die Vorrichtung (210) weist dabei Folgendes auf:
ein Anwesenheitserfassungsmodul (530), das so gestaltet ist, dass es die Anwesenheit eines Anwendergeräts (510) am Händlerstandort über drahtlose Signale vom Anwendergerät (510) erfasst, wobei die drahtlosen Signale vom Anwendergerät Informationen einschließen, die für das Anwendergerät (510) spezifisch sind, wobei ein Backend-System (540) so angeordnet ist, dass es die Zahlungsinformationen an das Anwendergerät (510) sendet, sobald das Anwendergerät (510) erfasst wurde; eine Point-of-Sale (POS)-Schnittstelle (1520), die mit einem Händler-POS-System (550) verbunden ist; und
ein Checkout-Modul (520), das so gestaltet ist, dass es mit dem Backend-System (540) kommuniziert, um die Identität des Anwendergerätes (510) anhand der Informationen, die vom Anwendergerät mittels Erfassungsmodul (530) erfasst wurden, zu prüfen, um die Zahlungsinformationen vom Anwendergerät (510) zu empfangen und die Zahlungsinformationen an das Händler-POS-System (550) über die POS-Schnittstelle (1520) zu übertragen.

2. Die Zahlungsverarbeitungsvorrichtung (210) nach Anspruch 1 weist darüberhinaus Folgendes auf:
ein Belegausgabemodul (250), das so gestaltet ist, dass es eine elektronische Version eines Transaktionsbelegs auf der Grundlage der Zahlungsinformationen erfasst.

3. Die Zahlungsverarbeitungsvorrichtung (210) nach Anspruch 1, wobei das Anwesenheitserfassungsmodul (530) darüberhinaus ein Bluetooth-Modul aufweist, das so gestaltet ist, dass es Signale an das Anwendergerät (510) übermittelt und davon empfängt, die Signale sind so gestaltet, dass sie die Anwesenheit erfassen.

4. Die Zahlungsverarbeitungsvorrichtung (210) nach Anspruch 3, wobei die Signale darüberhinaus so gestaltet sind, dass sie eine Angebotsbenachrichtigung an das Anwendergerät (510) übermitteln.

5. Die Zahlungsverarbeitungsvorrichtung (210) nach Anspruch 1, wobei das Checkout-Modul (520) darüberhinaus so gestaltet ist, dass es eine Transaktion zwischen dem Anwendergerät (510) und der Zahlungsverarbeitungsvorrichtung (210) verhindert, wenn eine Distanz zwischen dem Anwendergerät (510) und der Zahlungsverarbeitungsvorrichtung (210) größer ist als eine vorbestimmte Distanz.

6. Die Zahlungsverarbeitungsvorrichtung (210) nach Anspruch 5, wobei das Checkout-Modul (520) so gestaltet ist, dass es eine Distanz festlegt.

7. Die Zahlungsverarbeitungsvorrichtung (210) nach Anspruch 5, wobei das Checkout-Modul (520) darüberhinaus einen Dämpfungsregler (610) aufweist, der so gestaltet ist, dass er Signale, die vom Checkout-Modul (520) übertragen werden, abschwächt.

8. Die Zahlungsverarbeitungsvorrichtung (210) nach Anspruch 1, wobei die Zahlungsinformationen eine *Virtual Payment Account Number* (VPAN) aufweisen.

9. Die Zahlungsverarbeitungsvorrichtung (210) nach Anspruch 1, wobei die Zahlungsinformationen eine Transaktionskennung in Verbindung mit einer VPAN aufweisen.

10. Ein Verfahren für die Zahlungsverarbeitung zwischen einem Kunden und einem Händler am Händlerstandort unter Verwendung eines Kunden-Mobilgerätes (510), das Verfahren weist dabei die folgenden Schritte auf:
die Erfassung der Anwesenheit des Kunden-Mobilgeräts (510) am Händlerstandort über ein Erfassungsgerät (530) im Händlerstandort, wobei das Erfassungsgerät (530) so gestaltet ist, dass es drahtlose Signale mit dem Kunden-Mobilgerät (510) austauscht, die drahtlosen Signale schließen dabei Informationen ein, die spezifisch für das Kunden-Mobilgerät (510) sind; die Benachrichtigung, über ein externes Netzwerk (1540), eines Backend-Gerätes (540) über die Anwesenheit des Kunden-Mobilgeräts (510) mittels einer Netzwerk-Schnittstelle (1530) im Erfassungsgerät (530);
das Senden an das Kunden-Mobilgerät (510) von Zahlungsinformationen, die vom Backend-Gerät (540) empfangen wurden;
den Empfang vom Kunden-Mobilgerät (510) der Zahlungsinformationen; und die Übermittlung der Zahlungsinformationen an das Point-of-Sale (POS)-System (550) des Händlers.

11. Das Verfahren nach Anspruch 10, wobei das Erfassen der Anwesenheit des Kunden-Mobilgeräts (510) Folgendes aufweist:
das Senden einer Bluetooth-Anfragenachricht;
den Empfang einer Antwort auf die Bluetooth-Anfragenachricht, die eine *Bluetooth-Media Access Control* (MAC)-Adresse des Kunden-Mobilgeräts (510) aufweist; und die Übermittlung der Bluetooth-MAC-Adresse an das Backend-Gerät (540).

12. Das Verfahren nach Anspruch 10, wobei der Empfang der Zahlungsinformationen vom Kunden-Mobilgerät (510) den Empfang einer VPAN über einen der folgenden Wege aufweist: eine Bluetooth-Übermittlung; einen gescannten Barcode; eine Nahfeldkommunikations (NFC)-Übermittlung; und eine Anwendereingabe, die über den Kurzmitteilungsdienst (Short Message Service-SMS) empfangen wird.

13. Ein System für die Zahlungsverarbeitung zwischen einem Kunden und einem Händler am Händlerstandort, das System weist dabei Folgendes auf:
ein Anwendergerät (510); und
eine In-Store-Vorrichtung (500), die Folgendes aufweist:
ein Anwesenheitserfassungsmodul (530), das so gestaltet ist, dass es die Anwesenheit eines Anwendergeräts (510) am Händlerstandort über drahtlose Signale vom Anwendergerät (510) erfasst, wobei die drahtlosen Signale vom Anwendergerät Informationen einschließen, die für das Anwendergerät (510) spezifisch sind, wobei ein Backend-System (540) so angeordnet ist, dass es die Zahlungsinformationen an das Anwendergerät (510) sendet, sobald das Anwendergerät (510) erfasst wurde;
eine Point-of-Sale (POS)-Schnittstelle (1520), die mit einem Händler-POS-System (550) verbunden ist; und
ein Checkout-Modul (520), das so gestaltet ist, dass es mit dem Backend-System (540) kommuniziert, um die Identität des Anwendergeräts (510) anhand der Informationen, die vom Anwendergerät mittels Erfassungsmodul (530) erfasst wurden, zu prüfen, um die Zahlungsinformationen vom Anwendergerät (510) zu empfangen und die Zahlungsinformationen an das Händler-POS-System (550) über die POS-Schnittstelle (1520) zu übertragen.

14. Das System nach Anspruch 13, das darüberhinaus Folgendes aufweist:
einen Magnetkartenleser, der so gestaltet ist, dass er:
die Kartenzahlungsinformationen empfängt; und
die Kartenzahlungsinformationen an die In-Store-Vorrichtung (500) übermittelt, und
wobei die In-Store-Vorrichtung so gestaltet ist, dass sie die Kartenzahlungsinformationen an das Backend-System (540) übermittelt, das Backend-System (540) ist dabei so gestaltet, dass es die Kartenzahlungsinformationen als Zahlungsinformationen speichert.

## Revendications

1. Un dispositif de traitement de paiement (210) dans un emplacement de commerçant destiné au traitement de paiement d'un consommateur depuis l'emplacement du commerçant à l'aide d'un dispositif d'utilisateur (510), le dispositif (210) consistant en :
un module de détection de présence (530) configuré pour détecter la présence du dispositif d'utilisateur (510) à l'emplacement du commerçant à l'aide de signaux sans fil en provenance du dispositif d'utilisateur (510), dans lequel les signaux sans fil en provenance du dispositif d'utilisateur comprennent des informations spécifiques au dispositif d'utilisateur (510), dans lequel un système de serveur principal (540) est conçu pour envoyer des informations de paiement au dispositif d'utilisateur (510) après que le dispositif d'utilisateur (510) est détecté ; une interface de point de vente (POS) (1520) connectée à un système de POS de commerçant (550) ; et
un module de caisse (520) configuré pour communiquer avec le système de serveur principal (540) pour vérifier l'identité du dispositif d'utilisateur (510) à l'aide des informations recueillies en provenance du dispositif d'utilisateur par le module de détection de présence (530), pour recevoir les informations de paiement en provenance du dispositif d'utilisateur (510) et pour transmettre les informations au système de POS du commerçant pour le paiement au marchand système POS (550) à l'aide de l'interface de POS (1520).

2. Le dispositif de traitement de paiement (210) selon la revendication 1 consistant en outre en :
un module de prise de reçu (250) configuré pour capturer une version électronique d'un reçu de transaction lié aux informations de paiement.

3. Le dispositif de traitement de paiement (210) selon la revendication 1, dans lequel le module de détection de présence (530) comprend en outre un module Bluetooth configuré pour transmettre et recevoir des signaux au dispositif d'utilisateur (510), les signaux configurés pour détecter la présence.

4. Le dispositif de traitement de paiement (210) selon la revendication 3, dans lequel les signaux sont configurés en outre pour transmettre un message d'offre au dispositif d'utilisateur (510).

5. Le dispositif de traitement de paiement (210) selon la revendication 1, dans lequel le module de caisse (520) est configuré en outre pour empêcher une transaction entre le dispositif d'utilisateur (510) et le dispositif de traitement de paiement (210) si une distance entre le dispositif d'utilisateur (510) et le dispositif de traitement de paiement (210) est supérieure à une distance prédéfinie.

6. Le dispositif de traitement de paiement (210) selon la revendication 5, dans lequel le module de caisse (520) est configuré pour déterminer la distance.

7. Le dispositif de traitement de paiement (210) selon la revendication 5, dans lequel le module de caisse (520) consiste en outre en un atténuateur (610) configuré pour atténuer les signaux transmis depuis le module de caisse (520).

8. Le dispositif de traitement de paiement (210) selon la revendication 1, dans lequel les informations de paiement consistent en un numéro de compte de paiement virtuel (VPAN).

9. Le dispositif de traitement de paiement (210) selon la revendication 1, dans lequel les informations de paiement consistent en un identifiant de transaction associé avec un VPAN.

10. Un procédé destiné au traitement de paiement entre un consommateur et un commerçant à l'emplacement du commerçant à l'aide d'un dispositif mobile du consommateur (510), le procédé comprenant les étapes consistant :
à détecter la présence du dispositif mobile du consommateur (510) à l'emplacement du commerçant par un dispositif de détection (530) dans l'emplacement du commerçant, dans lequel le dispositif de détection (530) est configuré pour échanger des signaux sans fil avec le dispositif mobile du consommateur (510), les signaux sans fil comprenant des informations spécifiques au dispositif mobile du consommateur (510) ;
à notifier, sur le réseau externe (1540), un dispositif de serveur principal (540) la présence du dispositif mobile du consommateur (510), à l'aide d'une interface de réseau (1530) dans le dispositif de détection (530) ;
à envoyer, au dispositif mobile du consommateur (510), les informations de paiement reçues depuis le dispositif de serveur principal (540) ;
à recevoir en provenance du dispositif mobile du consommateur (510), les informations de paiement ; et à transmettre les informations de paiement à un système de point de vente de commerçant (POS) (550).

11. Le procédé selon la revendication 10, dans lequel la détection de présence du dispositif mobile du consommateur (510) consiste :
à envoyer un message d'interrogation Bluetooth ;
à recevoir une réponse au message d'interrogation Bluetooth consistant en une adresse de commande d'accès média (MAC) Bluetooth du dispositif mobile du consommateur (510) ; et à transmettre l'adresse MAC Bluetooth au dispositif de serveur principal (540).

12. Le procédé selon la revendication 10, dans lequel la réception, en provenance du dispositif mobile du consommateur (510) des informations de paiement consiste à recevoir un VPAN par l'intermédiaire d'une transmission Bluetooth ; un code-barres lu ; une transmission de communication en champ proche (NFC) ; et une entrée d'utilisateur reçue par l'intermédiaire de service de messages courts (SMS).

13. Un système destiné au traitement des paiements entre un consommateur et un commerçant à un emplacement de commerçant, le système consistant en :
un dispositif d'utilisateur(510) ; et
un dispositif dans le magasin (500) consistant en :
un module de détection de présence (530) configuré pour détecter la présence du dispositif d'utilisateur (510) à l'emplacement du commerçant à l'aide de signaux sans fil en provenance du dispositif d'utilisateur (510), dans lequel les signaux sans fil en provenance du dispositif d'utilisateur comprennent des informations spécifiques au dispositif d'utilisateur (510), dans lequel un système de serveur principal (540) est conçu pour envoyer des informations de paiement au dispositif d'utilisateur (510) après que le dispositif d'utilisateur (510) est détecté ;
une interface de point de vente (POS) (1520) connectée à un système de POS de commerçant (550) ; et
un module de caisse (520) configuré pour communiquer avec le système de serveur principal (540) pour vérifier l'identité du dispositif d'utilisateur (510) à l'aide des informations recueillies en provenance du dispositif d'utilisateur par le module de détection de présence (530), pour recevoir les informations de paiement en provenance du dispositif d'utilisateur (510) et pour transmettre les informations au système de POS du commerçant pour le paiement au marchand système POS (550) à l'aide de l'interface de POS (1520).

14. Le système selon la revendication 13, consistant en outre en :
un lecteur de carte magnétique configuré pour :
recevoir des informations de carte de paiement ; et
transmettre les informations de carte de paiement au dispositif dans le magasin (500) et
dans lequel le dispositif dans le magasin est configuré pour transmettre les informations de carte de paiement au système de serveur principal (540), le système de serveur principal (540) étant configuré pour stocker les informations de carte de paiement comme les informations de paiement.
